# EUROPEAN PATENT SPECIFICATION

(11) **EP 2 749 323 B1**
(45) Date of publication and mention of the grant of the patent: **14.09.2016**
(21) Application number: 13005955.3
(22) Date of filing: 20.12.2013
(51) Int. Cl.: A62C 2/06, F16L 5/04

(54) **A device for the fireproof sealing of a bushing of a pipe through a building wall**
Feuerfeste Dichtungsanordnung für eine Rohrdurchführung
Agencement d'un joint résistant au feu pour un passage tubulaire

(30) Priority: 27.12.2012 SE 1200789
(43) Date of publication of application: 02.07.2014
(73) Proprietor: Pedersén, Tommy, 554 74 Jönköping (SE); Rodal, Daniel, 566 32 Habo (SE)
(72) Inventor: Pedersén, Tommy, 554 74 Jönköping (SE); Rodal, Daniel, 566 32 Habo (SE)
(74) Representative: Lundquist, Arne

(56) References cited:
- EP-A1- 0 635 665
- WO-A2-91/19127

## Description

The present invention relates to a device for the fireproof sealing of a bushing of a pipe through a building wall, comprising two halves which put together embrace the pipe with a sealing mass, which swells when heated. Such a device is known from the Swedish patent SE 530 482 C2, which shows a relatively complicated device, comprising a great number of parts.

EP 0 635 665 A1 discloses a device according to the preamble of independent claim 1.

There is, however, a great demand for a simple, well functioning device of the art mentioned introductorily.

According to the invention, such a device is primarily characterized in that the second wall is formed with second and third portions attached to the first portion of the second wall, in the form of a first plane portion and a second plane portion in a common plane parallel to the longitudinal axis of the pipe, directed through the centre of the cross section of the pipe, whereas a first mass is placed in the space, that is created when putting the halves together, between the first, second and third portions of the second wall of the halves, directed towards each other.

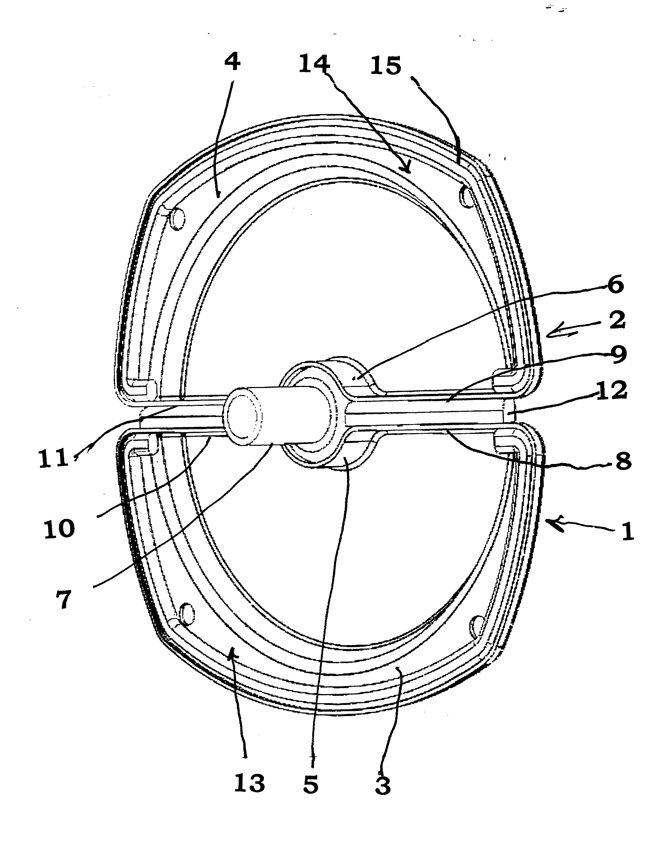

In one advantageous embodiment of the device, the first wall in its outer part forms a container with relatively small depth, intended for a fire groove, with a second mass joining the first wall with the building wall, sealing also when heated. In one advantageous embodiment of the device the second mass will not swell when heated. The second mass may advantageously be ceramic. The device will in the following be described, reference being made to the enclosed figure in perspective.

As is obvious from this each halve 1,2 is formed with a first wall 3,4 intended to be fastened to the building wall. From this first wall there extends a second wall, substantially at right angle from the first wall, with a first portion 5,6 partly rotationally cylindrical with a radius somewhat larger than the embraced pipe 7. The second wall is formed with second and third portions attached to the first portion of the wall, in the form of a first plane portion 8,9 and a second plane portion 10,11 in a common plane parallel to the longitudinal axis of the pipe 7, directed through the centre of the cross section of the pipe. Said first mass 12, swelling when heated, is intended to be placed in the space, that is created when putting the halves together, between the first, second and third portions 5,6,8,9,10, 11 of second wall of the halves, directed towards each other.

When building together the pipe is placed in the lower halve, in which there has been placed an appropriate portion of first mass, whereupon a further portion of first mass is put above the pipe and the upper halve is mounted pressed downwards towards the first mass present, whereupon both halves are fastened by screws to the building wall. To attain better security it is suitable to mount reversedly a pair of halves at the other side of the building wall, if the other side is accessible, that is to say if there is space enough. Also in this case, it is suitable to put in mass between the halves. In order to attain further fire security a second ceramic mass 15, which is substantially not swelling when heated, is placed in a container 13,14 with relatively little depth, formed in the outer portion of the first wall 3,4, connecting the first wall 3,4 with the building wall. As the second mass will not swell when heated it will keep its joining action even at heating.

The device may be manufactured in all conceivable sheet materials, even non-metallic fireproof materials, adjusted to occurring pipe dimensions.

## Claims

1. A device for the fireproof sealing of a bushing of a pipe through a building wall, comprising two halves which put together embrace the pipe with a sealing mass, which swells when heated, whereby each halve (1,2) is designed with a first wall (3,4), intended to be fastened to the building wall, whereas each halve is designed with a second wall, substantially at right angle to the first wall, with a first portion (5,6) partly rotationally cylindrical with a radius somewhat larger than the embraced pipe (7),
**characterized in that**
the second wall is formed with second and third portions attached to the first portion of the second wall, in the form of a first plane portion (8,9) and a second plane portion (10,11) in a common plane parallel to the longitudinal axis of the pipe (7), directed through the centre of the cross section of the pipe, whereas a first mass (12) is placed in the space, that is created when putting the halves together, between the first, second and third portions (5,6,8,9,10,11) of the second wall of the halves, directed towards each other.

2. A device according to claim 1,
**characterized in that**
the first wall (3,4) in its outer part forms a container (13,14) with relatively small depth, intended for a fire groove, with a second mass (15) joining the first wall (3,4) with the building wall, sealing also when heated.

3. A device according to claim 2,
**characterized in that**
the second mass (15) will not swell when heated.

4. A device according to claim 2 or 3,
**characterized in that**
the second mass (15) is ceramic.

## Patentansprüche

1. Feuerfeste Dichtungsanordnung für eine Rohrdurchführung durch eine Gebäudewand, mit zwei Hälften, die in zusammengesetztem Zustand das Rohr mit einer Dichtungsmaße umschließen, die sich beim Erhitzen aufquellt, wobei jede Hälfte (1, 2) mit einer ersten Wand (3, 4) ausgeformt ist, die zur Befestigung an der Gebäudewand vorgesehen ist, und jede Hälfte mit einer zweiten Wand ausgeformt ist, die im wesentlichen mit einem rechten Winkel zu der ersten Wand verläuft, und die einen ersten Abschnitt (5, 6) aufweist, der zum Teil rotationszylindrisch ist und einen geringfügig größeren Radius aufweist, als das umschlossene Rohr (7),
**dadurch gekennzeichnet, dass** die zweite Wand mit zweiten und dritten Abschnitten ausgeformt ist, die an dem ersten Abschnitt der zweiten Wand befestigt sind, und zwar in Form eines ersten ebenen Abschnitts (8, 9) und eines zweiten ebenen Abschnitts (10, 11) in einer gemeinsamen Ebene parallel zu der Längsachse des Rohres (7), die durch das Zentrum des Querschnitts des Rohres verläuft, wobei eine erste Masse (12) in dem Raum angeordnet ist, der zwischen dem ersten, dem zweiten und dem dritten Abschnitt (5, 6, 8, 9, 10, 11) der zweiten Wand der Hälften, die aufeinander zu gerichtet sind, entsteht, wenn die Hälften zusammengesetzt werden,

2. Anordnung nach Anspruch 1,
**dadurch gekennzeichnet, dass** die erste Wand (3, 4) in ihrem ersten äußeren Teil einen Behälter (13, 14) mit einer relativ geringen Tiefe bildet, der als Feuerrille mit einer zweiten Masse (15) dient, die die erste Wand (3, 4) mit der Gebäudewand verbindet und ebenfalls beim Erhitzen abdichtet.

3. Anordnung nach Anspruch 2,
**dadurch gekennzeichnet, dass** die zweite Masse (15) beim Erhitzen nicht aufquellt.

4. Anordnung nach Anspruch 2 oder 3,
**dadurch gekennzeichnet, dass** die zweite Masse (15) Keramik ist.

## Revendications

1. Dispositif pour une étanchéité ignifuge d'une douille d'un tuyau à travers un mur de bâtiment, comprenant deux moitiés qui, mises ensemble, saisissent le tuyau avec une masse d'étanchéité qui gonfle lorsqu'elle est chauffée, **caractérisé en ce que** chaque moitié (1, 2) est conçue ayant une première paroi (3, 4), destinée à être fixée sur le mur de bâtiment, en même temps que chaque moitié est conçue ayant une seconde paroi, sensiblement perpendiculaire à la première paroi, dotée d'une première partie (5,6) cylindrique partiellement rotative, ayant un rayon légèrement plus grand que le tuyau saisi (7),
**caractérisé en ce que** la seconde paroi est formée de deuxième et troisième parties reliées à la première partie de la seconde paroi, sous la forme d'une première partie plane (8,9) et d'une seconde partie plane (10, 11) dans un plan commun parallèle à l'axe longitudinal du tuyau (7), dirigé à travers le centre de la section transversale du tuyau, tandis qu'une première masse (12) est destinée à être placée dans l'espace qui est créé en mettant les moitiés ensemble, entre les premières, deuxième et troisième parties (5, 6, 8, 9, 10, 11) de la seconde paroi des moitiés orientées les unes vers les autres.

2. Dispositif selon la revendication 1, **caractérisé en ce que** la première paroi (3,4), dans sa partie extérieure, forme un conteneur (13, 14) ayant une profondeur relativement faible, destinée à une rainure de feu, une seconde masse (15) reliant la première paroi (3, 4) avec le mur de bâtiment, et étanchéifiant également lorsqu'elle est chauffée.

3. Dispositif selon la revendication 2, **caractérisé en ce que** la seconde masse (15) ne va pas gonfler lorsqu'elle sera chauffée.

4. Dispositif selon la revendication 2 ou 3,
**caractérisé en ce que** la seconde masse (15) est en céramique.
